# FASCICULE DE BREVET EUROPEEN

(11) **EP 0 688 274 B1**
(45) Date de publication et mention de la délivrance du brevet: **10.09.1997**
(21) Numéro de dépôt: 95907029.3
(22) Date de dépôt: 12.01.1995
(51) Int. Cl.: B60N 3/14

(54) **CORPS D'ALLUMAGE POUR ALLUME-CIGARES NOTAMMENT DE VEHICULE AUTOMOBILE**
ZIGARETTENANZÜNDERKÖRPER, INSBESONDERE FÜR KRAFTFAHRZEUGE
IGNITING MEMBER FOR A CIGARETTE LIGHTER, PARTICULARLY IN A MOTOR VEHICLE

(30) Priorité: 12.01.1994 FR 9400345; 02.09.1994 FR 9410744
(43) Date de publication de la demande: 27.12.1995
(73) Titulaire: VALEO VISION, 93000 Bobigny (FR)
(72) Inventeur: SIRE, Jean-Pierre, F-81200 Mazamet (FR); THIVET, Gilles, F-81340 Labruguière (FR); LOGEAIS, Gilles, F-75010 Paris (FR)
(74) Mandataire: Gamonal, Didier
(86) Numéro de dépôt international: FR9500037
(87) Numéro de publication internationale: WO9519273

(56) Documents cités:
- EP-A- 0 398 063
- EP-A- 0 437 250
- FR-A- 2 684 053
- US-A- 3 424 414
- US-A- 4 713 733

## Description

La présente invention concerne les corps d'allumage pour allume-cigares, notamment pour véhicules automobiles.

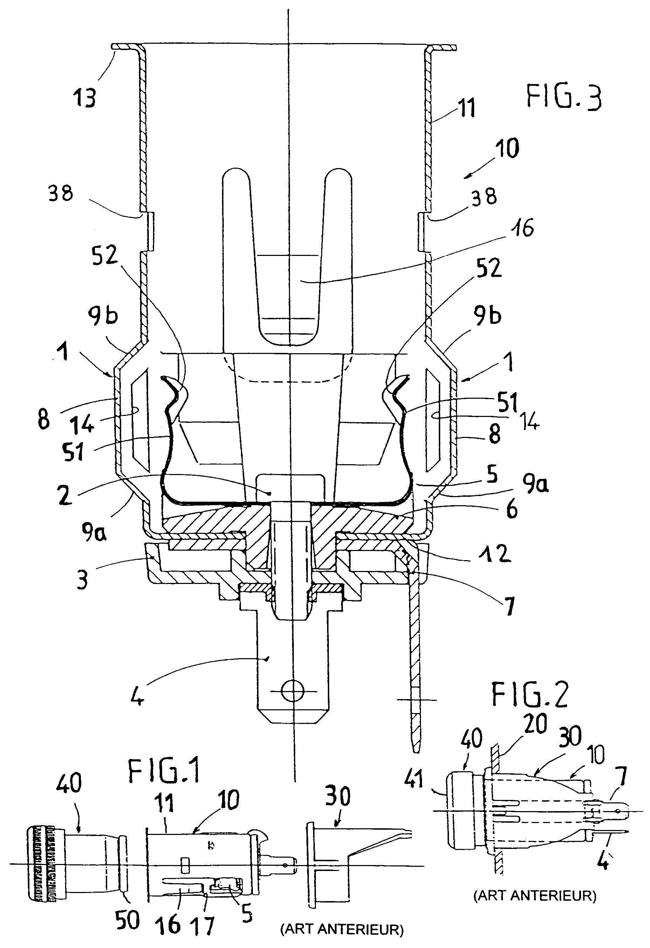

Ainsi qu'on le sait (figures 1 et 2) un allume-cigares comporte un corps d'allumage 10, formant prise de courant, propre à être fixé sur une paroi fixe du véhicule, par exemple la planche de bord 20 de celui-ci, soit directement, soit indirectement par une bague conductrice de lumière 30, dite bague éclairante.

Usuellement le montage du corps 10 dans la paroi 20 se fait par l'avant de ladite paroi (de la gauche vers la droite à la figure 2) et ce par simple enfilage axial.

Un bouchon 40, formant fiche de courant, est monté dans le corps 10 de forme creuse et porte à son extrémité libre un corps de chauffage, usuellement une résistance chauffante, logée dans une coupelle 50.

Le bouchon 40 chauffant amovible est maintenu dans le corps 10, formant réceptacle, en position d'attente à l'aide de languettes 16 découpées dans une douille 11 métallique, que comporte le corps 10.

La douille 11 porte intérieurement un bilame 5 monté sur un porte-bilame en matière électriquement isolante. Le bilame 5 présente des languettes globalement d'orientation axiale, dont les extrémités libres sont conformées en crochets de retenue pour coopérer avec la coupelle 50.

En position d'attente le bouchon 40 est à distance du bilame 5.

Pour allumer, par exemple une cigarette, l'occupant du véhicule enfonce le bouton mobile 41, que comporte le bouchon 40, en sorte que la coupelle 50 vient en prise avec les languettes du bilame 5.

Un circuit électrique est alors établi, la douille 11 portant extérieurement pour ce faire des pièces d'alimentation électriques 4,7 reliées aux bornes de la source de tension (usuellement la batterie) du véhicule.

Dès que le corps de chauffage précité atteint la température voulue les languettes du bilame 5 se dilatent sous l'effet de la chaleur, en sorte que la coupelle 50 du bouchon 40 est libérée.

Il ne reste plus ensuite qu'à extraire le bouchon 40.

Les languettes du bilame 5 sont donc admises à s'écarter (ou s'ouvrir), d'une part, lorsque l'on enfonce le bouton 41 et, d'autre part, après chauffage dudit bouchon 40.

Pour ce faire des ouvertures 17 de grande taille sont pratiquées dans la douille 11 au droit des languettes du bilame 5 afin de permettre un mouvement desdites languettes et éviter un contact électrique entre la douille 11, usuellement reliée à la masse du véhicule, et le bilame 5 usuellement relié à la borne positive de la batterie du véhicule.

Des corps étrangers, tels que des impuretés des souillures ou autres de grande dimension, peuvent pénétrer à l'intérieur de la douille 11, par l'intermédiaire desdites ouvertures 17 de grande taille, et perturber, dérégler, voire même empêcher le fonctionnement du bilame, dont le réglage est délicat.

Le bilame 5 risque donc d'être incapable de s'ouvrir suffisamment pour libérer le bouchon 40 lorsque celui-ci a atteint la température de chauffage requise. il se produit alors une surchauffe dangereuse, notamment pour la planche de bord 20 et la bague 30 toute deux en matière plastique. Un court-circuit entre le bilame 5 et la douille 11 peut être établi par l'intermédiaire des impuretés.

Un autre risque peut également se produire compte tenu de l'implantation de l'allume-cigares dans un lieu (par exemple planche de bord ou console du véhicule) où se trouve de nombreux faisceaux électriques associés à des commutateurs, des instruments ou autres appareils électriques.

Un faisceau électrique peut donc toucher, notamment sous l'effet de phénomènes de vibrations ou de chocs, le bilame 5 encore chaud et être endommagé entraînant la mise hors service d'un des appareils précités.

Pour pallier cet inconvénient on peut songer, par exemple à la lumière du document US-A-3,424,414, à faire appel à une pièce supplémentaire de protection montée à l'arrière de la douille 11 et masquant les ouvertures 17.

Cette solution n'est pas satisfaisante car elle entraîne un coût de construction plus élevé et rend un montage par l'avant de la paroi 20 plus difficile voire même impossible.

En outre cette pièce augmente l'encombrement du corps d'allumage au niveau de son fond ce qui peut être gênant compte tenu de l'implantation d'autres pièces à proximité du corps d'allumage.

La présente invention a pour objet de pallier ces inconvénients et donc de créer, de manière simple et économique, un nouveau corps d'allumage plus fiable et moins dangereux, sans augmenter outre mesure son encombrement et tout en conservant une facilité de montage par l'avant de celui-ci.

Suivant l'invention un allume-cigares du tue sus-indiqué est caractérisé en ce que la douille du corps d'allumage est emboutie localement vers l'extérieur au droit des languettes du bilame pour formation d'au moins une protubérance d'orientation axiale ménageant un espace autorisant un mouvement desdites languettes.

Lorsque le corps d'allumage est monté directement sur la paroi fixe associée du véhicule, on prévoit avantageusement une protubérance par languette du bilame. Lorsque le montage est réalisé par une bague éclairante on peut prévoir une protubérance commune à toutes les languettes du bilame.

Grâce à l'invention, seule la douille est modifiée de manière simple et économique par emboutisssage, les autres pièces du corps d'allumage étant inchangées.

Le nombre de pièces du corps d'allumage reste donc inchangé, ainsi que sa structure.

Les faisceaux électriques sont protégés par la ou les protubérances selon l'invention formant un écran protecteur entre le bilame et l'extérieur de la douille.

Les impuretés et souillures ne peuvent donc pas pénétrer à l'intérieur de la douille à ce niveau en sorte que le réglage du bilame est conservé, que le corps d'allumage est plus fiable et fonctionne mieux.

Ce corps d'allumage est également plus sûr car les risques de surchauffe sont diminués. Les risques de courtcircuit par l'intermédiaire des corps étrangers sont réduits.

En outre la douille est rigidifiée et les languettes du bilame ne risquent pas d'être endommagées ou déréglées, grâce aux protubérances, lors de mauvaises manipulations, par exemple des chutes, avant montage sur véhicule.

De plus un montage du corps d'allumage par l'avant sur la paroi fixe associée du véhicule est possible. En effet lorsque la fixation est réalisée à l'aide de la bague éclairante les protubérances ne gênent pas le montage car elles sont peu profondes en étant de hauteur inférieur à l'épaisseur de ladite bague. Il faut alors prévoir une creusure dans la bague éclairante par protubérance, le montage du corps d'allumage dans la bague se faisant par enfilage axial des protubérances dans les creusures en forme de rainures.

Dans tous les cas, il est possible de pratiquer localement des encoches dans le bord du trou de passage de la paroi fixe de fixation de l'allume-cigares, pour passage des protubérances selon l'invention et montage par l'avant avec enfilage axial de la douille.

L'encombrement de la douille n'est augmenté faiblement que localement ce qui évite toute interférence avec les autres pièces portées par ladite paroi fixe à ce niveau.

D'autres avantages apparaîtront à la lumière de la description et des dessins annexés dans lesquels :
- la figure 1 est une vue en perspective éclatée d'un allume-cigares de l'art antérieur ;
- la figure 2 est une vue de l'allume-cigares de la figure 1 monté sur sa paroi fixe de support associée ;
- la figure 3 est une vue en coupe axiale d'un allume-cigares selon l'invention.
- la figure 4 est une vue analogue à la figure 3 d'un allume-cigares selon l'invention équipé d'une bague éclairante.

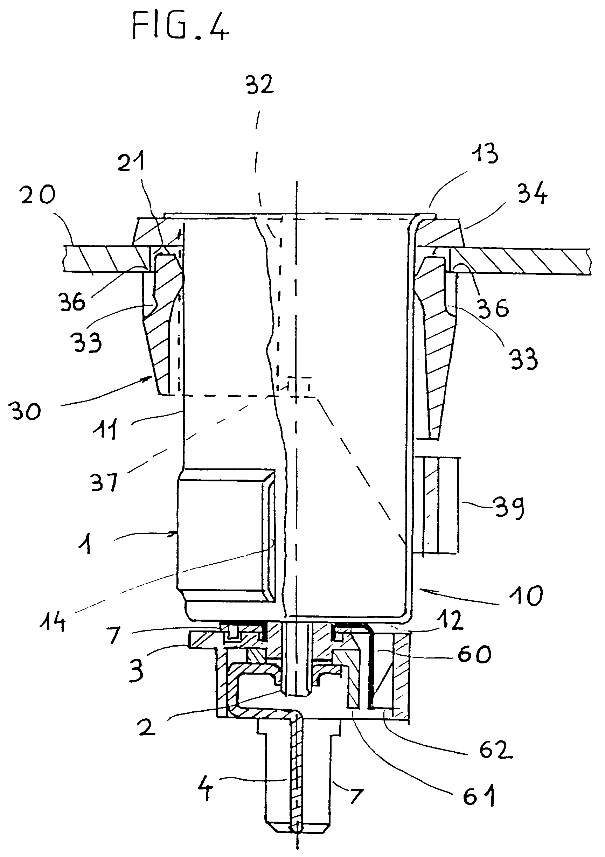

Dans les figures 3 et 4 les mêmes références sont utilisées pour les éléments communs à l'invention et à ceux de l'art antérieur.

Ainsi à la figure 3 on voit en 10 le corps d'allumage d'un allume-cigares pour véhicule automobile.

Ce corps 10 comporte des pièces en matière électriquement conductrice à savoir la douille 11 métallique avec en 16 l'une des languettes de maintien du bouchon 40 des figures 1 et 2 en position d'attente, les parties d'alimentation électriques 4,7, un organe de fixation 2 et le bilame 5. Ici deux languettes 16 diamétralement opposés sont prévues.

Le corps 10 comporte également des pièces en matière électriquement isolantes 3,6, avantageusement en matière synthétique, telle que de la matière plastique.

La douille 11, de forme cylindrique, est ici en tôle emboutie et présente un fond 12 troué centralement pour passage de l'organe de fixation 2 et d'une douille de la pièce 6 formant porte-bilame.

Le bilame 5 et le porte-bilame 6 sont montés à l'intérieur de la douille 11, tandis que les pièces 3,4,7 sont montées à l'extérieur de la douille 11, qui porte ainsi toutes les autres pièces du corps d'allumage de part et d'autre de son fond 12.

Le porte-bilame 6, en matière également thermiquement isolante, forme donc une entretoise entre le fond 12 (la face interne de celui-ci) et la base, en forme de disque, du bilame 5 et c'est pour cette raison que le porte-bilame 6 comporte une face supérieure bombée pour son contact local avec la base du bilame 5 présentant ici deux languettes 51 globalement d'orientation axiale, avec chacune une extrémité libre 52 en forme de crochet pour retenue de la coupelle 50 de la figure 1 lorsque le bouchon 40 est en position de chauffage. Les crochets 52 sont dirigés l'un vers l'autre, en sorte qu'il est formé une pince pour la retenue de la coupelle 50.

Le bilame 5 a donc en section une forme de U d'écartement réduit au niveau des crochets 52, avec deux lames 51 dirigées vers l'extrémité ouverte de la douille 11.

La pièce d'alimentation électrique 7 consiste ici en une languette en forme d'équerre, saillante axialement, en contact avec le fond 12 (la face externe de celle-ci) de la douille 11.

Ici la languette 7 est propre à être reliée à la borne négative de la source de tension (la batterie) du véhicule.

L'autre pièce d'alimentation électrique 4 consiste également en une languette en forme d'équerre saillante axialement. Elle est propre à être reliée à la borne positive de la batterie du véhicule. La pièce d'isolation 3 forme une entretoise entre les bases horizontales des languettes 4,7 et est globalement en forme de cuvette. Elle présente centralement de part et d'autre de son fond deux saillies axiales dont l'une, en forme de collerette, reçoit intérieurement la douille centrale du porte-bilame 6, et dont l'autre forme une glissière pour montage de la partie horizontale de la languette 4 et blocage en rotation par coopération de formes de ladite languette 4.

Le bord de la pièce 3 est échancré localement pour passage de la partie axiale de la languette 7, dont la partie horizontale présente deux picots (non visibles) coopérant avec des trous (non visibles) pratiqués dans le fond 12.

Les picôts s'engagent avantageusement dans des creusures de la pièce 6 pour blocage en rotation de celle-ci.

Ainsi la languette 7 est immobilisée en rotation par coopération de formes avec le fond 12. Cette languette 7 immobilise à son tour en rotation la pièce 3 par sa partie axiale traversant de manière précitée la pièce 3.

Elle immobilise également par ses picôts la pièce 6. Bien entendu la pièce 6 peut présenter au moins un picôt transversant, à la faveur d'ouvertures, le fond 12 et la base de la languette pour immobilisation en rotation des pièces 12,7.

L'organe de fixation 2 consiste en une vis, dont la tête prend appui sur la base du bilame 5. Cette vis 2 traverse centralement les pièces 6,3,4 et par sa partie filetée se visse dans la partie horizontale taraudée à cet effet de la languette 4.

Bien entendu la partie horizontale de la languette 7 est trouée cenralement pour passage de la douille centrale du porte-bilame 6 traversant le fond 12.

L'alésage interne de ladite douille est de forme tronconique pour passage de la vis 2 qui sert à la fixation et à l'assemblage des pièces 5,6,7,3,4 avec le fond 12.

Suivant l'invention la douille 11 est emboutie localement vers l'extérieur au droit des languettes 51 du bilame 5 pour formation d'au moins une protubérance 1 d'orientation axiale ménageant un espace autorisant un mouvement desdites languettes 51.

Ici la douille 11 comporte deux protubérances 1 locales saillantes d'orientation axiale à raison d'une par languette 51. Ces protubérances 1 sont globalement diamétralement opposées. Elles ont en section une forme trapézoïdale avec un fond 8 raccordé axialement à la partie principale de la douille 11 par deux côtés inclinés, ici symétriques, respectivement un côté inférieur 9a proche du fond 12 de la douille 11 et un côté supérieur 9b éloigné par rapport au fond 12.

Grâce aux côtés (ou parois) inclinés, on obtient une réduction de l'encombrement des protubérances, le fond 8 d'orientation axiale des protubérances 1 ayant une longueur légèrement inférieure à celle des languettes 51. Le côté incliné inférieur 9a de la protubérance 1 se raccorde axialement à la partie principale de la douille 11 globalement dans le plan de la base du bilame 5. Le côté incliné supérieur 9b de la protubérance 1 se raccorde à ladite partie principale axialement au-delà de l'extrémité libre des languettes 51.

Ce côté 9b se raccorde axialement au fond 8 globalement dans un plan passant par les extrémités libres des languettes 51. Le fond 8 est donc décalé axialement vers l'extrémité libre de la douille 11 par rapport à la base du bilame 5. Il en résulte qu'un maximum de place est dégagé au niveau du fond 12 de la douille 11.

Ainsi un mouvement d'expansion (ou de dilatation) des languettes 51 est rendu possible, la profondeur ou hauteur des protubérances 1 dépendant des applications et est telle que lors du chauffage du bouchon les languettes 51 en s'ouvrant ne viennent pas en contact avec le fond 8, le côté supérieur 9b autorisant un mouvement des languettes 51.

Ces protubérances 1 masquent donc les languettes 51 et constituent un écran protecteur pour celles-ci.

Pour mémoire on rappellera qu'en position de chauffage du bouchon un circuit électrique est établi, le courant électrique passant par la languette 4, la vis 2, le bilame 5, la coupelle 50 (figure 1), la partie tubulaire du bouchon 40, la douille 11 et la languette 7.

On notera que le fond 8 est situé sur un diamètre globalement égal (légèrement inférieur) à celui du diamètre extérieur de la collerette 13, que présente la douille métallique 11 à son extrémité libre.

Dans le cas où la fixation du corps 10 sur la paroi 20 de la figure 2 se fait directement on prévoit des encoches dans le trou de passage 21 de la paroi 20 à raison d'une encoche par protubérance 1 pour montage par l'avant et enfilage axial du corps 10 dans ledit trou. Dans le cas du montage du corps 10 sur la paroi 20 par l'intermédiaire d'une bague éclairante on prévoit dans ladite bague 30 (figure 4) des creusures 32, à raison d'une creusure par protubérance , pour montage par enfilage axial du corps 10 dans sa bague 30 ledit corps 10 débouchant au niveau de la collerette de ladite bague 30.

En effet les probubérances 1 sont de faible hauteur, en pratique inférieures à l'épaisseur de la bague 30.

Pour mémoire on rappelera que la bague 30 présente des languettes saillantes semi-découpées 33, ici deux languettes diamétralement opposées et une collerette d'extrémité 34.

Les languettes 33 d'orientation axiale sont crantés pour formation d'au moins un épaulement 36 destiné à venir en prise avec la paroi 20.

Lors du montage de l'allume-cigares on enfile par l'avant d'abord la bague 30 dans l'ouverture 21 de la paroi 20. Lors de cette opération les languettes 33 s'escamotent en se resserant vers l'intérieur au passage du trou 21, puis se détendent après passage du trou. Ainsi après montage de la bague 30, la paroi 20 est prise en sandwich entre la collerette 34 et les épaulements 36 des languettes 33.

Après on introduit la douille 11 dans la bague 30 en enfilant les protubérances 1 dans les creusures 32, d'orientation axiale.

De manière connue en soi, la bague 30 présente des crans 37 destinés chacun a pénétrer dans une ouverture complémentaire 38 de la douille 11 (figure 3) pour fixation de la douille 11 avec les pièces qu'elle porte, notamment les languettes 4,7, à la bague 30 elle même fixée de manière précitée à la paroi 20. Ici la bague 30 entoure en partie la douille 11 et présente un talon 39 pour montage d'une source d'éclairage.

Ici les protubérances 1 sont apparentes (figure 4) la bague 30 étant plus courte que la douille 11.

On notera que les creusures 32, ici en forme de rainures axiales, permettent d'orienter la douille dans le bon sens, du fait que l'on enfile axialement les protubérances dans les creusures 32. Ainsi les crans 37 penétrerons de manière sûre dans les ouvertures 38 en sorte qu'il est créée un détrompeur.

En variante, si l'on veut ne pas réduire trop l'épaisseur de la bague 30, on peut prévoir des protubérances sur la bague ménageant un espace pour le montage des protubérances du corps d'allumage. Dans ce cas il faut prévoir des encoches dans le trou 21 de la paroi 20 pour passage des protubérances de la bague 30.

Bien entendu la présente invention n'est pas limitée à l'exemple de réalisation décrit. En particulier l'organe de fixation 2 peut consister en un rivet.

La pièce 3 peut former la partie mâle d'un connecteur comprenant les languettes 4,7.

Les protubérances 1 peuvent comporter le fond 8 d'orientation axiale comme à la figure 3, se raccordant à la partie principale de la douille 11 par de parties arrondies. Les côtés de la protubérance 1 peuvent ne pas être symétriques. Le fond 8 peut être bombé.

Il est possible d'augmenter la taille des protubérances tant axialement que circonférentiellement lorsque l'environnement dans lequel est monté le corps d'allumage le permet.

Il est possible de modifier la forme du bilame, notamment au niveau de la zone de raccordement des languettes 51 à la base du bilame 5 compte tenu de l'espace dégagé par les protubérances 1.

Le nombre des protubérances dépend du nombre des languettes 51, certains bilames comportant trois ou quatre languettes 51.

Dans le cas d'une fixation par la bague éclairante, celle-ci peut être creusée intérieurement pour montage d'une protubérance unique commune à toutes les languettes. Bien entendu on peut aussi augmenter l'épaisseur de la bague et du trou associé de la paroi 20 lorsque cela est possible compte tenu de l'environnement.

On notera que la fente associée à la languette 16 n'est pas gênante car normalement elle est masquée par le bouchon de l'allume-cigares et que le bilame 5 peut comporter au moins, de manière connue en soi, une languette de sécurité, propre à venir en contact avec la douille 11 en cas de surchauffe.

En variante figure 4, la languette de sécurité 60, en forme d' équerre, peut être interposée entre le fond 12 de la douille et la languette d'alimentation 7 et venir en contact avec une pièce 61 reliée électriquement à la languette 4 pour établissement d'un court circuit en cas de surchauffe. La pièce 3 est alors modifié et présente un coin 62 pour appui de la languette de securité 60, d'orientation axiale, et définition d'un entrefer précis entre la languette 60 et la pièce 61 coincée entre la languette 4 et la pièce 3.

Bien entendu les protubérances 1 ont une largeur de préférence légèrement supérieure à celle des languettes 51 du bilame.

A la figure 3 le fond 8 se raccorde circonférentiellement à la partie principale de la douille 11 par deux parois (ou côtés) 9a, 9b laissant apparaître latéralement des fentes 14, le fond 8 ayant une largeur supérieure à celle des languettes 51. Ces fentes 14, ici de forme trapézoïdale, ont une taille inférieure à celle des fentes 17 de la figure 1 en sorte qu'elles empêchent la pénétration des impuretés ou une venue en contact du faisceau électrique avec le bilame. En outre elles permettent avantageusement une ventilation.

Bien entendu les protubérances peuvent avoir un contour fermé et dans ce cas, on prévoit sur la douille au moins un petit trou de ventilation à 90° par rapport à la protubérance 1.

Cette ventilation peut être également réalisée en augmentant la taille de la fente associée à chaque languette 16, décalée circonférentiellement, ici à 90°, par rapport aux protubérances 1 et aux languettes 51 pour ne pas interférer avec celles-ci. Ces languettes 16 sont obtenue par découpe.

## Revendications

1. Corps d'allumage pour allume-cigares, notamment pour véhicule automobile, comportant une douille métallique (11) portant intérieurement un bilame (5) doté de languettes (51) globalement d'orientation axiale, caractérisé en ce que ladite douille (11) est emboutie localement vers l'extérieur au droit des languettes (51) du bilame (5) pour formation d'au moins une protubérance (1) d'orientation axiale ménageant un espace autorisant un mouvement desdites languettes (51).

2. Corps d'allumage selon la revendication 1, caractérisé en ce que la protubérance (1) présente un fond (8) globalement d'orientation axiale.

3. Corps d'allumage selon la revendication 2, caractérisé en ce que ledit fond (8) a une longueur légèrement inférieure à celle des languettes (51) du bilame (5).

4. Corps d'allumage selon la revendication 2 ou 3, caractérisé en ce que le fond (8) se raccorde axialement à la partie principale de la douille (11) par deux côtés inclinés (9a,9b).

5. Corps d'allumage selon la revendication 4, caractérisé en ce que la protubérance a en section une forme trapézoïdale.

6. Corps d'allumage selon la revendication 4 ou 5, caractérisé en ce que l'un (9a) des côtés inclinés se raccorde axialement à la partie principale de la douille (11) globalement dans le plan de la base que présente le bilame (5).

7. Corps d'allumage selon la revendication 6, caractérisé en ce que l'autre (9b) des côtés inclinés, dit côté incliné supérieur (9b) se raccorde à la partie principale de la douille (11) axialement au-delà de l'extrémité libre des languettes (51) du bilame (5).

8. Corps d'allumage selon la revendication 7, caractérisé en ce que le côté incliné supérieur (9b) se raccorde axialement au fond (8) de la protubérance (1) globalement dans un plan passant par l'extrémité libre des languettes (51) du bilame (5).

9. Corps d'allumage selon l'une quelconque des revendications 1 à 8, caractérisé en ce que la largeur de la protubérance (1) est supérieure à la largeur de la languette associée (51) du bilame (5).

10. Corps d'allumage selon l'une quelconque des revendications précédentes, caractérisé en ce qu'il est prévue une protubérance (1) par languette (51) du bilame (5).

11. Corps d'allumage selon la revendication 10 caractérisé en ce qu'il est enfilé dans une bague éclairante (30) présentant à cette effet une creusure (32) par protubérance (1) et en ce que les protubérances (1) ont une hauteur inférieure à l'épaisseur de la bague (30).

12. Corps d'allumage selon l'une quelconque des revendications précédentes, dans lequel da douille métallique (11) présente au moins une languettes (16) pour maintien d'un bouchon chauffant amovible (40), caractérisé en ce que ladite languette (16) est décalé circonférentiellement par rapport aux protubérances (1).

## Claims

1. Lighter body for a cigar lighter, notably for an automobile, having a metal sleeve (11) carrying on the inside a bimetallic device (5) provided with blades (51) of axial orientation overall, characterised in that the said sleeve (11) is locally pressed outwards in line with the blades (51) of the bimetallic device (5) to form at least one axially oriented protuberance (1) forming a space allowing movement of the said blades (51).

2. Lighter body according to claim 1, characterised in that the protuberance (1) has an end (8) of axial orientation overall.

3. Lighter body according to claim 2, characterised in that the said end (8) has a length slightly less than that of the blades (51) of the bimetallic device (5).

4. Lighter body according to claim 2 or 3, characterised in that the end (8) is connected axially to the main part of the sleeve (11) by two sloping faces (9a, 9b).

5. Lighter body according to claim 4, characterised in that the protuberance has a trapezoid-shaped cross section.

6. Lighter body according to claim 4 or 5, characterised in that one (9a) of the sloping faces is connected axially to the main part of the sleeve (11) overall in the plane of the base of the bimetallic device (5).

7. Lighter body according to claim 6, characterised in that the other one (9b) of the sloping faces, referred to as the upper sloping face (9b), is connected to the main part of the sleeve (11) axially beyond the free end of the blades (51) of the bimetallic device (5).

8. Lighter body according to claim 7, characterised in that the upper sloping face (9b) is connected axially to the end (8) of the protuberance (1) overall in a plane passing through the free end of the blades (51) of the bimetallic device (5).

9. Lighter body according to any one of the claims 1 to 8, characterised in that the width of the protuberance (1) is greater than the width of the associated blade (51) of the bimetallic device (5).

10. Lighter body according to any one of the preceding claims, characterised in that one protuberance (1) per blade (51) of the bimetallic device (5) is provided.

11. Lighter body according to claim 10, characterised in that it is slipped into an illuminating ring (30) having for this purpose one hollow (32) per protuberance (1) and in that the protuberances (1) have a height less than the thickness of the ring (30).

12. Lighter body according to any one of the preceding claims, in which the metal sleeve (11) has at least one blade (16) for holding a removable heating plug (40), characterised in that the said blade (16) is offset circumferentially with respect to the protuberances (1).

## Patentansprüche

1. Zigarettenanzünderkörper, insbesondere für Kraftfahrzeuge, umfassend eine Metallhülse (11), die innen einen Bimetallstreifen (5) mit insgesamt axial ausgerichteten Zungen (51) trägt, **dadurch gekennzeichnet,** daß die besagte Hülse (11) in Höhe der Zungen (51) des Bimetallstreifens (5) örtlich nach außen ausgebaucht ist, um mindestens eine axial ausgerichtete Ausstülpung (1) zu bilden, die einen Zwischenraum enthält, der eine Bewegung der besagten Zungen (51) ermöglicht.

2. Anzünderkörper nach Anspruch 1 , **dadurch gekennzeichnet,** daß die Ausstülpung (1) einen insgesamt axial ausgerichteten Boden (8) aufweist.

3. Anzünderkörper nach Anspruch 2 , **dadurch gekennzeichnet,** daß der besagte Boden (8) eine Länge hat, die etwas kleiner als die Länge der Zungen (51) des Bimetallstreifens (5) ist.

4. Anzünderkörper nach Anspruch 2 oder 3 , **dadurch gekennzeichnet,** daß sich der Boden (8) über zwei geneigte Seiten (9a, 9b) axial an den Hauptteil der Hülse (11) anschließt.

5. Anzünderkörper nach Anspruch 4 , **dadurch gekennzeichnet,** daß die Ausstülpung im Querschnitt eine Trapezform aufweist.

6. Anzünderkörper nach Anspruch 4 oder 5 , **dadurch gekennzeichnet,** daß sich eine (9a) der geneigten Seiten axial an den Hauptteil der Hülse (11) insgesamt in dar Ebene der Unterseite anschließt, die der Bimetallstreifen (5) aufweist.

7. Anzünderkörper nach Anspruch 6 , **dadurch gekennzeichnet,** daß sich die andere (9b) dar geneigten Seiten, die als obere geneigte Seite (9a) bezeichnet wird, an den Hauptteil der Hülse (11) axial hinter dem freien Ende der Zungen (51) des Bimetallstreifens (5) anschließt.

8. Anzünderkörper nach Anspruch 7 , **dadurch gekennzeichnet,** daß sich die obere geneigte Seite (9b) axial an den Boden (8) der Ausstülpung (1) insgesamt in einer Ebene anschließt, die durch das freie Ende der Zungen (51) des Bimetallstreifens (5) verläuft.

9. Anzünderkörper nach einem der Ansprüche 1 bis 8, **dadurch gekennzeichnet,** daß die Breite der Ausstülpung (1) größer als die Breite der zugehörigen Zunge (51) des Bimetallstreifens (5) ist.

10. Anzünderkörper nach einem der vorangehenden Ansprüche, **dadurch gekennzeichnet**, daß eine Ausstülpung (1) pro Zunge (51) des Bimetallstreifens (5) vorgesehen ist.

11. Anzünderkörper nach Anspruch 10 , **dadurch gekennzeichnet,** daß er in einen Leuchtring (30) eingesetzt ist, der dazu eine Einsenkung (32) pro Ausstülpung (1) aufweist, und daß die Ausstülpungen (1) eine Höhe haben, die kleiner als die Dicke des Rings (30) ist.

12. Anzünderkörper nach einem der vorangehenden Ansprüche, bei dem die Metallhülse (11) mindestens eine Zunge (16) aufweist, um einen herausziehbaren Heizeinsatz (40) zu halten, **dadurch gekennzeichnet**, daß die besagte Zunge (16) im Verhältnis zu den Ausstülpungen (1) umfangsmäßig versetzt ist.
